# EUROPÄISCHE PATENTANMELDUNG

(11) **EP 2 668 837 A1**
(43) Veröffentlichungstag der Anmeldung: **04.12.2013**
(21) Anmeldenummer: 12170513.1
(22) Anmeldetag: 01.06.2012
(51) Int. Cl.: A01D 45/00

(54) **Detektionsvorrichtung zur Detektion eines Spargels**

(71) Anmelder: Fraunhofer-Gesellschaft zur Förderung der angewandten Forschung e.V., 80686 München (DE)
(72) Erfinder: Hanke, Randolf, 90517 Paschendorf (DE); Sohn, Kai, 73525 Schwäbisch Gmünd (DE); Sukowski, Frank, 92353 Postbauer-Hang (DE); Uhlmann, Norman, 90587 Obermichelbach (DE); Salamon, Michael, 90763 Fürth (DE); Funk, Christoph, 91077 Kleinsendelbach (DE); Voland, Virginia, 90763 Fürth (DE); Schmitt, Michael, 91097 Großenseebach (DE); Schröpfer, Stefan, 90522 Oberasbach (DE)
(74) Vertreter: Stöckeler, Ferdinand

(57) **Zusammenfassung**

Eine Detektionsvorrichtung zur Detektion eines Spargels in einem Erddamm (12) umfasst eine Durchleuchtungseinheit (22) und eine Bildverarbeitungseinheit (24). Die Durchleuchtungseinheit (22) weist eine Röntgenquelle (26) und einen Röntgendetektor (28,28a,28b,37) auf und ist ausgebildet, um den zwischen der Röntgenquelle und dem Röntgendetektor positionierten Erddamm (12) zu durchleuchten und um mindestens zwei Durchleuchtungsaufnahmen (32a,32b) des Spargels (10) aus mindestens zwei unterschiedlichen Durchleuchtungswinkeln aufzunehmen. Die Bildverarbeitungseinheit ist ausgebildet, um auf Basis der mindestens zwei Durchleuchtungsaufnahmen eine Position des Spargels in Längsrichtung des Erddamms und eine Position des Spargels in Transversalrichtung des Erddamms zu bestimmen.

## Beschreibung

Ausführungsbeispiele der vorliegenden Erfindung beziehen sich auf eine Detektionsvorrichtung und ein Verfahren zur Detektion eines Spargels insbesondere mittels Röntgen-Computerlaminographie, auf ein Erntesystem sowie auf die Verwendung der Detektionsvorrichtung.

Bei der Ernte von Spargel bzw. Bleichspargel besteht laut einer Markt- und Geschäftsfeldanalyse ein erhebliches Effizienzsteigerungs- und Rationalisierungspotenzial. Allein in Deutschland werden annähernd 100.000 Bleichspargel mit einem Marktwert von ca. € 500 Million pro Jahr erzeugt. Der größte Anteil an den Erzeugungskosten, bis zu 30%, entfallen dabei auf Personalkosten. Da die Lohnkosten kontinuierlich steigen, besteht der Bedarf hinsichtlich zunehmender Automatisierung der Spargelernte. Bei der automatisierten Spargelernte ist zwischen selektiven und nicht-selektiven Ernteprozessen zu unterscheiden. Derartige herkömmliche Ernteprozesse werden nachfolgend beschrieben, nachdem zuerst kurz auf die Wachstumsbedingungen eingegangen wird.

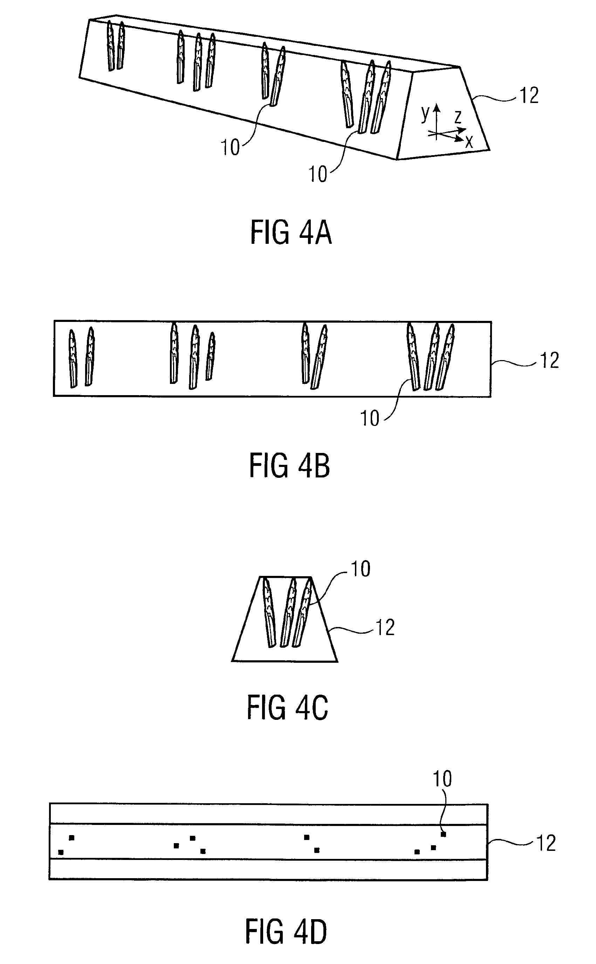

Wie in Fig. 4a-d gezeigt ist, wächst ein Spargel 10 stangenförmig unter der Erde bzw. in einem aufgehäuften Erddamm 12. Fig. 4a zeigt eine dreidimensionale Ansicht des Erddamms 12 mit den Spargelstangen 10, während in Fig. 4b die Frontalebene (xy-Ebene), in Fig. 4c die Sagitalebene (yz-Ebene) und in Fig. 4d die Transversalebene (xz-Ebene) dargestellt ist. Die einzelnen Spargelstangen 10 sind sowohl in Längsrichtung x als auch in Transversalrichtung z in dem Erddamm 12 verteilt, wobei die Spargelstangen 10 typischerweise eine Hauptwachstumsrichtung haben, die näherungsweise entlang der y-Richtung bzw. etwa senkrecht zu der Oberfläche des Erddamms 12 verläuft.

Während bei nicht-selektiven Ernteprozessen zum Beispiel mittels eines sogenannten Vollernters der komplette Spargeldamm abgefräst wird, kann bei selektiven Ernteprozessen der Spargel 10 einzeln detektiert und dann geerntet bzw. gestochen werden. Bisherige kommerzielle Detektionsverfahren erfassen den Spargel 10 an der Oberfläche des Erddamms 12, wenn ein entsprechendes Reifestadium erreicht ist, so dass die Spitze des Spargels 10 optisch zu erkennen ist. Durchleuchtungsverfahren, adaptiert auf die Erfassung des Spargels 10 im Inneren eines Erddamms 12 ermöglichen darüber hinaus eine zweidimensionale Abbildung der Frontalebene bzw. in der xy-Ebene längs des Erddamms 12. Hierbei ist jedoch die Bildqualität aufgrund des immensen Streustrahlenanteils in Kombination mit den schwachen Kontrasteigenschaften des Spargels 10 in dem stark absorbierenden Umgebungsmaterial des Erddamms 12 eingeschränkt. Insofern sind selektive Ernteprozesse nur bedingt umsetzbar.

Deshalb ist es Aufgabe der vorliegenden Erfindung, ein Konzept zur Detektion eines Spargels in einem Erddamm zu schaffen, welches eine erhöhte Präzision bei der Lokalisierung ermöglicht.

Die Aufgabe wird durch eine Detektionsvorrichtung gemäß Anspruch 1, ein Erntesystem gemäß Anspruch 10, die Verwendung einer Detektionsvorrichtung gemäß Anspruch 13 und 14 sowie durch ein Verfahren zur Detektion gemäß Anspruch 15 gelöst.

Ausführungsbeispiele der vorliegenden Erfindung schaffen eine Detektionsvorrichtung zur Detektion eines Spargels in einem Erddamm, welche eine Durchleuchtungseinheit und eine Bildverarbeitungseinheit aufweist. Die Durchleuchtungseinheit umfasst eine Röntgenquelle und einen Röntgendetektor und ist ausgebildet, um den zwischen der Röntgenquelle und dem Röntgendetektor positionierten Erddamm zu durchleuchten und um mindestens zwei Durchleuchtungsaufnahmen des Spargels aus mindestens zwei unterschiedlichen Durchleuchtungswinkeln aufzunehmen. Die Bildverarbeitungseinheit ist ausgebildet, um auf Basis der mindestens zwei Durchleuchtungsaufnahmen eine Position des Spargels in Längsrichtung des Erddamms und eines Position des Spargels in Transversalrichtung des Erddamms zu bestimmen.

Ausführungsbeispiele der vorliegenden Erfindung basieren darauf, dass Spargel in einem Erddamm mittels einer Röntgen-computerlaminographischen Methode lokalisiert werden kann. Bei der hierfür adaptierten Translations-Computerlaminographie werden zumindest zwei zueinander versetzte Durchleuchtungsaufnahmen des Spargels aufgenommen, wobei an den zwei versetzten Positionen eine Durchleuchtung des Spargels mit unterschiedlichen Durchleuchtungswinkeln erfolgt. Hierzu werden beispielsweise bei der Aufnahme (Durchleuchtung) ein Röntgendetektor und eine Röntgenquelle mit einem festen Strahlenkegel längs zu dem Erddamm, also translatorisch, verschoben, so dass der Spargel durch den festen Strahlenkegel in Kombination mit dem länglichen Röntgendetektor an unterschiedlichen Längspositionen in unterschiedlichen Durchleuchtungswinkel, also z.B. schräg zur Längsbewegung, durchleuchtet wird. Aus den hier erhaltenen Durchleuchtungsaufnahmen wird mittels eines Rekonstruktionsalgorithmus ein 3D-Volumen inklusive der Längsposition und Transversalposition des Spargels ermittelt, wobei die Präzision (und die Bildqualität) durch die Mehrzahl der Durchleuchtungsaufnahmen gesteigert ist. Aufsetzend hierauf können vorteilhafterweise die Ortsinfonnationen (z.B. Längs- und Transversalposition) genutzt werden, um mittels einer automatischen Stecheinheit den Spargel selektiv zu ernten.

Entsprechend weiteren Ausführungsbeispielen kann basierend auf einer derartigen dreidimensionalen Durchleuchtung eine Größe und ein Reifegrad des Spargels ermittelt werden, so dass dieser Basis für eine Ernteplanung und Wachstumsanalyse bzw. Anbauplanung ist. Die Ernteplanung wird wesentlich verbessert, da der Spargel schon vor Oberflächendurchbruch analysiert und lokalisiert werden kann. Ebenso ist es durch diese genaue Analyse (z.B. täglich) möglich, das Wachstum zu verfolgen und basierend hierauf die Anbaumethoden zu optimieren bzw. effizienter zu gestallten.

Weitere Ausführungsbeispiele schaffen ein Erntesystem mit der oben beschriebenen Detektionsvorrichtung und eine Erntevorrichtung, welche eine Positionierungseinheit und eine Stecheinheit aufweist. Die Positionierungseinheit ist ausgebildet, um die Stecheinheit in Abhängigkeit von der bestimmten Position des Spargels in Längsrichtung und der bestimmten Position des Spargels in Transversalrichtung zu positionieren, wobei die Stecheinheit ausgebildet ist, um den Spargel nach der Positionierung zu ernten. Hierbei ist es vorteilhaft, dass, im Vergleich zur manuellen Ernte, aufgrund der Selektivität der Anteil qualitativ hochwertigen Spargels erhöht werden kann. Hieraus resultiert ein geringerer Ausschuss, sodass ferner auf dem Markt höhere Preise durchgesetzt werden können. Des Weiteren ist auch eine erhebliche Kostenreduzierung bei der Spargelernte durch eine Verkürzung des Stechprozesses und insbesondere durch reduzierte Personalkosten möglich.

Weitere Ausführungsbeispiele beziehen sich auf die Verwendung der oben beschriebenen Detektionsvorrichtung zur Bestimmung der Position des Spargels in Längsrichtung und der Position des Spargels in Transversalrichtung sowie auf die Verwendung der oben beschriebenen Detektionsvorrichtung zur Positionierung einer Erntevorrichtung in Abhängigkeit der bestimmten Positionen.

Entsprechend einem weiteren Ausführungsbeispiel schafft die vorliegende Erfindung ein Verfahren zur Detektion eines Spargels in einem Erddamm. Das Verfahren umfasst die Schritte des Durchleuchtens des zwischen einer Röntgenquelle und einem Röntgendetektor einer Durchleuchtungseinheit positionierten Erddamms und des Aufnehmens von mindestens zwei Durchleuchtungsaufnahmen des Spargels aus mindestens zwei unterschiedlichen Durchleuchtungswinkeln. Ferner umfasst das Verfahren den Schritt des Bestimmens einer Position des Spargels in Längsrichtung des Erddamms und eine Position des Spargels in Transversalrichtung des Erddamms auf Basis der mindestens zwei Durchleuchtungsaufnahmen des Spargels.

Nachfolgend werden Ausführungsbeispiele der Erfindung anhand der beiliegenden Zeichnungen näher erläutert. Es zeigen:
- Fig. 1 a: ein schematisches Blockschaltbild einer Detektionsvorrichtung zur Detektion eines Spargels gemäß einem Ausführungsbeispiel;
- Fig. 1b: schematische Darstellungen einer Röntgenquelle und eines Röntgendetektors einer Detektionsvorrichtung zur Illustration des Prinzips der Translations-Computerlaminographie gemäß dem Ausführungsbeispiel aus Fig. 1a;
- Fig. 1c: eine schematische Darstellung einer rekonstruierten Transversalebene zur Illustration des Vorgangs der Rekonstruktion der Position des Spargels für das Ausführungsbeispiel aus Fig. 1a bzw. 1b;
- Fig. 2a: ein schematisches Blockschaltbild einer Detektionsvorrichtung mit einem mehrzeiligen Röntgendetektor gemäß einem weiteren Ausführungsbeispiel;
- Fig. 2b: ein schematisches Blockschaltbild einer Detektionsvorrichtung mit einem flächigen Röntgendetektor gemäß einem weiteren Ausführungsbeispiel;
- Fig. 3: ein schematisches Blockschaltbild eines Erntesystems gemäß einem Ausführungsbeispiel; und
- Fig. 4a-4d: schematische Darstellungen eines für den Spargelanbau verwendeten Erddamms.

Bevor nachfolgend Ausführungsbeispiele anhand der Figuren näher erläutert werden, wird darauf hingewiesen, dass gleichwirkende bzw. gleiche Elemente mit gleichen Bezugszeichen versehen sind, so dass die Beschreibung derer aufeinander anwendbar bzw. austauschbar ist.

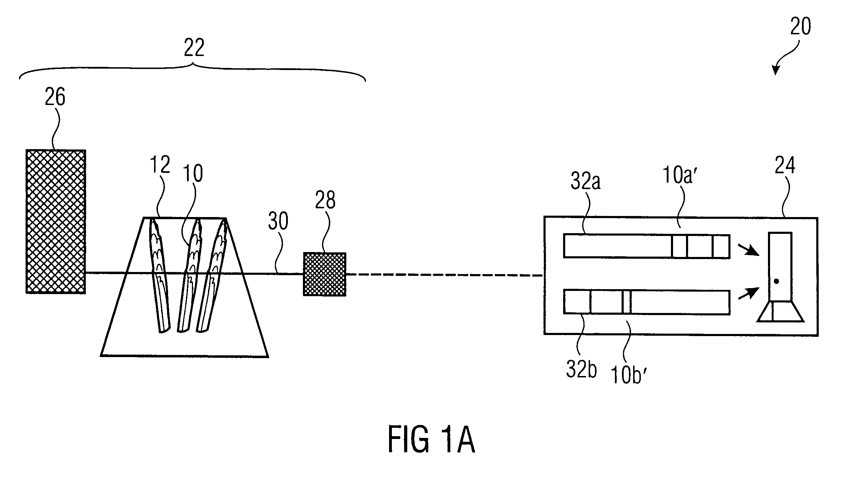

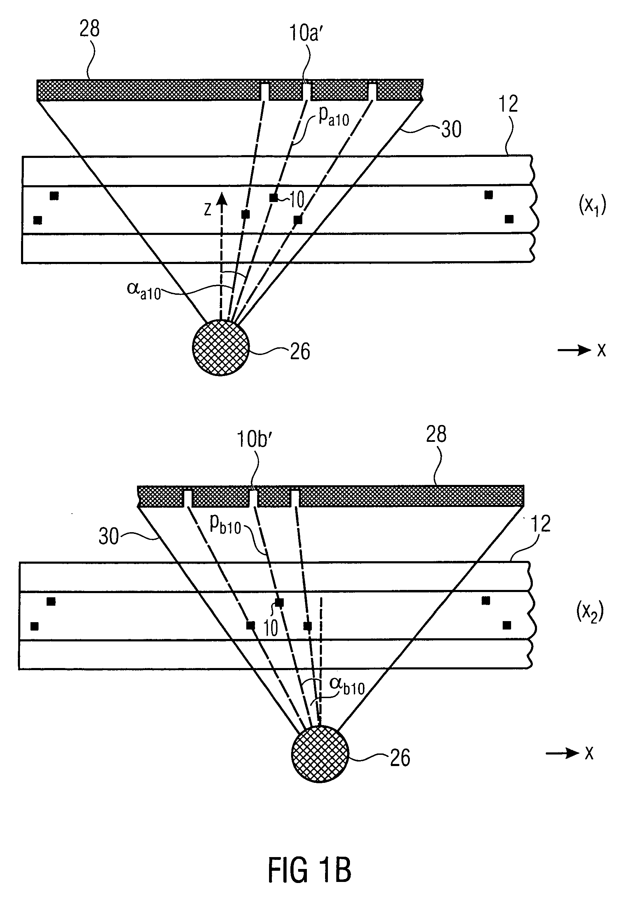

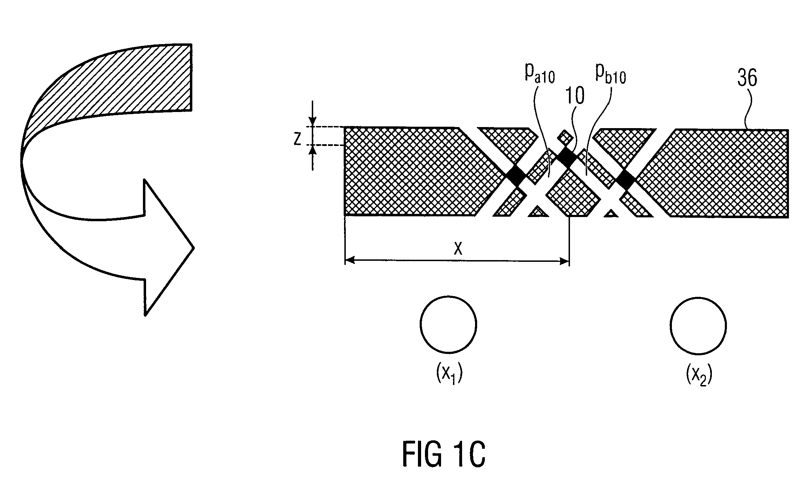

Fig. 1 zeigt eine Detektionsvorrichtung 20 mit einer Durchleuchtungseinheit 22 und einer Bildverarbeitungseinheit 24. Die Durchleuchtungseinheit 22 umfasst eine Röntgenquelle 26 und einen Röntgendetektor 28, die einander gegenüberliegen und so angeordnet sind, dass der Erddamm 12 mit dem Spargel 10 dazwischen liegt.

Der hier in der Sagitalebene (vgl. Fig. 4c) dargestellte Erddamm 12 wird also von der Seite in Transversal- bzw. z-Richtung durchleuchtet. Da die Röntgenquelle 26, z.B. eine Röntgenröhre, eine punktförmige Röntgenquelle ist, erfolgt eine Emission eines Strahlenkegels 30, wie in Fig. 1b dargestellt ist. Dieser Strahlenkegel 30 bzw. das bei der Durchleuchtung des Erddamms 12 mit der Strahlung 30 resultierende Absorptionsprofil wird mit dem bevorzugt länglichen Röntgendetektor 28, z.B. einem Zeilendetektor, aufgenommen. Hieraus ergibt sich als erste Durchleuchtungsaufnahme 32a ein längliches Absorptionsprofil, bei dem durch den Spargel 10 eine lokale Abweichung der Intensität 10a' gegenüber dem umgebenden Medium erzeugt wurde. Das längliche Absorptionsprofil 32a entsteht durch die Projektion des Strahlenkegels über einen Winkelbereich 30 auf den länglichen, entlang des Erddamms 12 angeordneten Zeilendetektor 28. Um nun die Position des Spargels 10 im Raum (d.h. in Längs- bzw. x-Richtung des Erddamms 12, vgl. Fig. 4b, und in Transversalrichtung, vgl. Fig. 4c,) exakt zu ermitteln, wird eine weitere Durchleuchtungsaufnahme 32b des Spargels 10 in einem weiteren Durchleuchtungswinkel aufgenommen, wobei der weitere Durchleuchtungswinkel gegenüber dem ersten Durchleuchtungswinkel von der Durchleuchtungsaufnahme 32a unterschiedlich ist. In dieser Durchleuchtungsaufnahme 32b ist eine bei der Durchleuchtung des Spargels 10 resultierende lokale Abweichung der Intensität 10b' gegenüber der Abweichung 10a' aus der Durchleuchtungsaufnahme 32a entlang der x-Achse verschoben, so dass bei Kombination der zwei Durchleuchtungsaufnahmen 32a und 32b die Position des Spargels 10 im Erddamm 12 ermittelt werden kann. Diese Rekonstruktion erfolgt in der Bildverarbeitungseinheit 24, die dazu ausgebildet ist, die mindestens zwei Durchleuchtungsaufnahmen 32a und 32b so zu kombinieren, dass ein Volumendatensatz entsteht, auf Basis dessen die Position des Spargels 10 in Längs- und Transversalrichtung exakt detektierbar ist.

Für die Durchleuchtung des Spargels 10 aus unterschiedlichen Durchleuchtungswinkeln für die unterschiedlichen Durchleuchtungsaufnahmen 32a und 32b gibt es mehrere Möglichkeiten der Realisierung. Eine ist es, den Spargel 10 mittels zwei lateral nebeneinander angeordneten bzw. entlang der Längsachse versetzten Röntgenquellen 26 zu durchleuchten und hierbei zwei Absorptionsprofile (Durchleuchtungsaufnahmen) mittels zwei zueinander angewinkelten (und versetzten) Röntgendetektoren aufzunehmen. Eine weitere, bevorzugte Möglichkeit besteht darin, von dem Spargel 10 mindestens zwei Durchleuchtungsaufnahmen unter Zuhilfenahme eines länglichen Röntgendetektors 28 und einer Röntgenquelle 26 mit einem Strahlenkegel 30 an unterschiedlichen Längspositionen (x-Positionen) aufzunehmen, so dass der Spargel 10 durch den Strahlungskegel 30 in unterschiedlichen Durchleuchtungswinkeln durchleuchtet wird, wie in Fig. 1b detailliert erläutert wird.

Fig. 1b zeigt die Durchleuchtung des Erddamms 12 in der Transversalebene mittels der Röntgenquelle 26 und dem (länglichen) Röntgendetektor 28. In einer oberen Darstellung ist die Durchleuchtungseinheit 22 (Röntgenquelle 26 und Röntgendetektor 28) in einer ersten Längsposition x₁ relativ zu dem Erddamm 12 angeordnet, während in einer unteren Darstellung die Durchleuchtungseinheit 22 in einer zweiten Längsposition x₂ relativ zu dem Erddamm angeordnet ist.

Die zweite Längsposition x₂ ist gegenüber der ersten Längsposition x₁ um einen kleinen Abstand (relativ zu der Breite des Erddamms, z.B. 60 cm), z.B. um 2 cm, 10 cm oder 25 cm, entlang des Erddamms 12 versetzt, so dass bei der Durchleuchtung desselben sich der Spargel 10 sowohl bei der ersten Durchleuchtung als auch bei der zweiten Durchleuchtung innerhalb des festen Strahlenkegels 30 befindet. Da der Strahlenkegel 30 fächerförmig ist, erfolgt eine Durchleuchtung des Spargels 10 mit unterschiedlichen Durchleuchtungswinkeln abhängig von der Längsposition x₁ bzw. x₂ der Durchleuchtungseinheit. An der Längsposition x₁ wird der Spargel 10 mit einem ersten Durchleuchtungswinkel αₐ₁₀, z.B. +5° bezogen auf die Transversalrichtung z, d.h. schräg zur Transversalebene, durchleuchtet, während an der anderen Längsposition x₂ der Spargels 10 mit einem zweiten Durchleuchtungswinkel α_{b10}, z.B. -10°, also schräg entgegen der Längsrichtung x, durchleuchtet wird. Insofern wird an den zwei unterschiedlichen Längspositionen x₁ und x₂ die durch den Spargel 10 entstehenden Intensitätsabweichungen 10a' und 10b' mit je einer Projektionsachse pₐ₁₀ und p_{b10} auf unterschiedliche Detektorpositionen auf dem Detektor 28 projiziert. An dieser Stelle sei angemerkt, dass der Strahlenkegel 30 eine feste Winkelbreite, z.B. 20° oder 30° (oder 5° bis 90°), aufweist, wobei die Winkelbreite durch den Emissionswinkel der Röntgenquelle 26, die Breite des Röntgendetektors 28 und ggf. auch durch den Abstand zwischen der Röntgenquelle 26 und dem Detektor 28 definiert ist. Sozusagen wird der Strahlenkegel 30 durch ein Dreieck zwischen der punktförmigen Röntgenquelle 26 und dem (parallel zu dieser angeordneten) flächigen Röntgendetektor 28 gebildet.

Fig. 1c zeigt eine transversale Rekonstruktionsdarstellung 36, welche das Ergebnis der Kombination der zwei Durchleuchtungsaufnahmen 32a und 32b darstellt. In der rekonstruierten Transversalebene sind die Projektionsachsen pₐ₁₀ und p_{b10} der von den unterschiedlichen Positionen x₁ und x₂ ermittelten Intensitätsminima 10a' und 10b' unter Zuhilfenahme der zugehörigen Durchleuchtungswinkel αₐ₁₀ und α_{b10} rekonstruiert. Die Schnittpunkte der Projektionsachse pₐ₁₀ und p_{b10} geben Rückschluss auf die Position des Spargels 10 im Erddamm 12, so dass auf Basis dieser transversalen Rekonstruktionsdarstellung 36 die Position sowohl in Längsrichtung x als auch in Transversalrichtung z ermittelt werden kann. Es sei angemerkt, dass zur maßstäblichen Rekonstruktion ferner geometrischen Parameter, wie z.B. der Abstand zwischen der Röntgenquelle 26 und dem Röntgendetektor 28 und/oder der Winkelbereich, hinzugezogen werden.

Diese Kombination der mindestens zwei Durchleuchtungsaufnahmen in der virtuellen Transversalebene 36 zur Lokalisierung des Spargels 10 bzw. insbesondere zur Bestimmung der Tiefenlage des Spargels 10 ist also mit der aus der Optik bekannten stereoskopischen Erfassung vergleichbar. Dieses Vorgehen, bei dem mehrere Durchleuchtungsaufnahmen an unterschiedlichen Längspositionen x₁ und x₂ aufgenommen werden, ist insofern vorteilhaft, da der längliche Erddamm 12 sowieso bei der Ermittlung mehrerer entlang der Länge des Erddamms 12 angepflanzter Spargel 10 an mehreren Längspositionen x des Erddamms 12 durchleuchtet wird. Entsprechend weiteren Ausführungsbeispielen weist die Detektionsvorrichtung deshalb eine (automatische) Verfahreinheit auf, die ausgebildet ist, um die Durchleuchtungseinheit längs des Erddamms 12 (bzw. parallel zu diesem) zu bewegen, wobei die Durchleuchtungsaufnahmen 32a und 32b entweder kontinuierlich während der Bewegung oder an vorgegebenen x-Positionen aufgenommen werden.

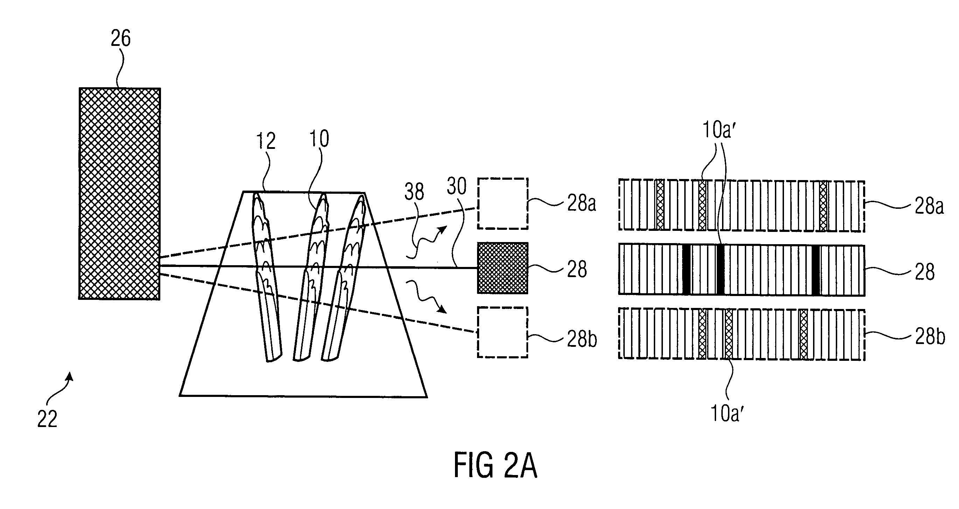

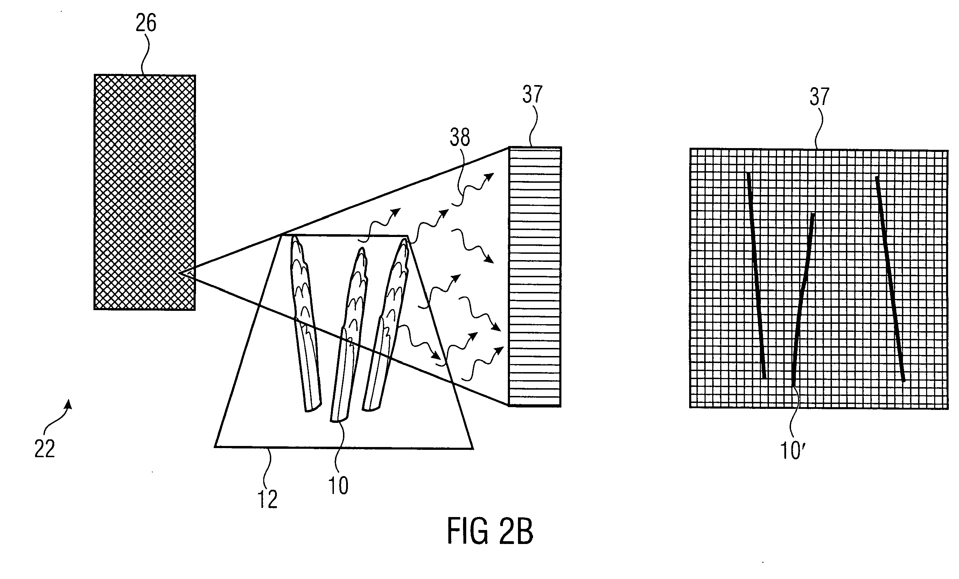

Bezug nehmend auf Fig. 2a und 2b werden zwei mögliche Detektorvarianten erörtert. Fig. 2a zeigt die Durchleuchtungseinheit 22 aus Fig. 1a, wobei die Durchleuchtungseinheit 22 einen zeilenförmigen Röntgendetektor 28 aufweist, der längs in x-Richtung angeordnet ist. Wie in der Frontalabbildung des zeilenförmigen Röntgendetektors 28 dargestellt ist, weist dieser eine Mehrzahl von nebeneinander zu einer Zeile angeordneten Sensoren, z.B. Pixel, auf, um so den Strahlenkegel 32 entlang des Erddamms 12 abzubilden. Es sei ferner angemerkt, dass der Röntgendetektor 28 zur Umwandlung von Röntgenstrahlung in sichtbares bzw. mittels eines CCDs detektierbares Licht einen Szintillator aufweisen kann.

Entsprechend weiteren Ausführungsbeispielen weist die Durchleuchtungseinheit 22 eine Mehrzahl von vertikal übereinander angeordneten Zeilendetektoren 28, 28a und 28b auf, wobei diese grundsätzlich dem oben diskutieren Aufbau entsprechen. Durch die parallel angeordneten, optionalen Zeilendetektoren 28a und 28b können weitere Parameter, wie, z.B. eine Höheninfonnationen oder eine Position des Spargels 10 in Vertikalrichtung (y) bestimmt werden. Entsprechend weiteren Ausführungsbeispielen ist es hierbei auch möglich, eine Spargelwachstumshöhe und damit einen Reifegrad des Spargels 10 zu bestimmen. Ein schräg in dem Erddamm 12 wachsender Spargel 10 bewirkt, dass einzelne von den Detektorzeilen 28, 28a und 28b detektierte Intensitätsabweichungen 10a' von Detektorzeile zu Detektorzeile 28, 28a, 28b leicht verschoben sind. Auf Basis dieser Verschiebung ist die Wachstumsrichtung des Spargels 10 (Winkel) bestimmbar.

Entsprechend einem weiteren Ausführungsbeispiel kann der Detektor der Durchleuchtungseinheit 22 auch ein Flächendetektor 37 sein, wie in Fig. 2b dargestellt ist. Der Flächendetektor 37 ist anstelle der ein oder mehreren zeilenförmigen Röntgendetektoren 28, 28a und 28b längs zum Erddamm 12 angeordnet. Dieser weist eine Vielzahl von Sensoren bzw. Pixeln in Längsrichtung und eine Vielzahl von Sensoren bzw. Pixeln in Vertikalrichtung auf. Hierdurch kann eine höhere Bildqualität erreicht werden, so dass eine mittlere Wachstumsrichtung oder ein Reifegrad des Spargels 10 anhand des hoch aufgelösten lokalen Intensitätsminima 10a' genau detektiert werden kann.

Wie in Fig. 2a und 2b dargestellt, kann durch Reflexion der Strahlung 30 beispielsweise an Sandkörnern in dem Erddamm 12 Streustrahlung 38 entstehen. Um diese Streustrahlung 38 zu reduzieren und damit die Bildqualität zu verbessern, kann der Röntgendetektor 28 entsprechend weiteren Ausführungsbeispielen einen sogenannten Kollimator aufweisen. Diese Kollimatorschirme werden bevorzugterweise in Randbereichen angebracht und dienen dazu, Streustrahlung vom Röntgendetektor fernzuhalten.

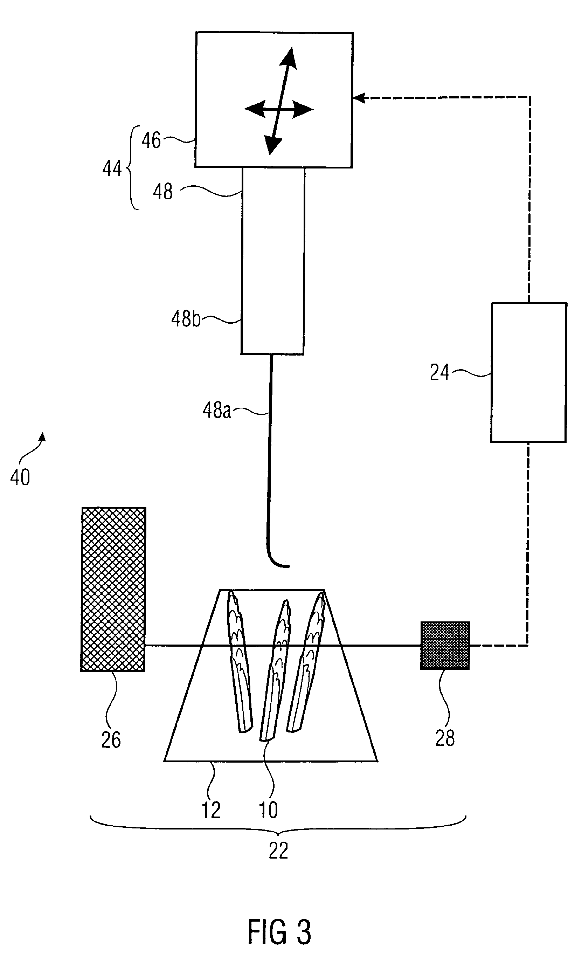

Fig. 3 zeigt ein Erntesystem 40, bei dem die Detektionseinheit 22 über die Bildverarbeitungseinheit 24 mit einer Erntevorrichtung 44 gekoppelt ist. Die Erntevorrichtung 44 weist eine Positioniereinheit 46 und eine Stecheinheit 48 auf. Diese beiden Einheiten sind oberhalb des Erddamms 12 (senkrecht zu diesem) angeordnet, so dass mittels der Stecheinheit 48, die beispielsweise ein Stechmesser 48a und einen Stechmesserantrieb 48b umfasst, der Spargel 10 aus dem Erddamm 12 ausgestochen bzw. geerntet werden kann. Die an die Positioniereinheit 46 gekoppelte Stecheinheit 48 ist beispielsweise an der Verfahreinheit (nicht dargestellt) der Detektionseinheit 22 befestigt.

Die Stecheinheit 48 zum Stechen des Spargels 10 wird abhängig von der mittels der Bildverarbeitungseinheit 24 (unter Zuhilfenahme der Durchleuchtungseinheit 22) ermittelten Position in Längsrichtung und Transversalrichtung durch die Positionierungseinheit 46 über dem zu stechenden Spargel 10 positioniert, so dass dieser exakt ausgestochen werden kann. Hierbei erfolgt sowohl eine Positionierung in Transversalrichtung als auch in Längsrichtung, wobei angemerkt wird, dass entsprechend weiterer Ausführungsbeispiele die Positionierung in Längsrichtung auch durch die Verfahreinheit (die insbesondere zum Positionieren der Durchleuchtungseinheit 22 bzw. Des gesamten Erntesystems 40 längs des Erddamms 12 vorgesehen ist) erfolgen kann. Die getrennte Längspositionierung des Erntesystems 40 bzw. der Durchleuchtungseinheit 22 mittels der Verfahreinheit und der Stecheinheit 48 bietet den Vorteil, dass die Bewegung der Stecheinheit 48 unabhängig von der Bewegung der Durchleuchtungseinheit 22 (für die Erfassung der mindestens zwei unterschiedlichen Durchleuchtungsaufnahmen an unterschiedlichen Längspositionen) erfolgen kann.

Entsprechend weiteren Ausführungsbeispielen können die Positionsinfonnationen, z.B. eine Winkelinformation oder Information über eine vertikale Position, dazu genutzt werden, um weitere Freiheitsgrade (über die Längsposition und die Transversalposition des Stechmessers 48a hinaus) zu beeinflussen. Deshalb kann die Positionierungseinheit 46 dazu ausgebildet sein, den Winkel der Stecheinheit 48 gegenüber dem Erddamm 12 abhängig von einer mittleren Wachstumsrichtung des Spargels 10 einzustellen. Ebenso kann eine Größen- bzw. Reifegradinformation dazu benutzt werden, nur selektive Spargelstangen in dem Erddamm 12 zu ernten und noch nicht reife Spargelstangen stehenzulassen. Des Weiteren kann die Positionierungseinheit 46 dazu ausgebildet sein, um den Abstand der Stecheinheit 48 gegenüber dem Spargel 10 zu verändern, so dass der Spargel 10 in Abhängigkeit von der Vertikalposition, also in der richtigen Tiefe im Erddamm 12 geerntet werden kann. Alternativ wäre es auch möglich, dass die Stechtiefe über den Stechmesserantrieb 48b beeinflusst wird, so dass der Stechmesserantrieb 48b folglich durch die Information über die ermittelte Vertikalposition des Spargels 10 gesteuert wird.

Da die Steuerung des Erntesystems 40 bzw. insbesondere die Positionierungseinheit 46 auf Basis der Positionsinformationen, die von der Bildverarbeitungseinheit 24 zur Verfügung gestellt werden, erfolgt, beziehen sich weitere Ausführungsbeispiele der Erfindung auf die Verwendung der Detektionsvorrichtung 20 zur Positionierung der Erntevorrichtung 44 und allgemein auf die Bestimmung der Position des Spargels 10 in Längsrichtung x und der Position des Spargels 10 in Transversalrichtung z.

Bezug nehmend auf Fig. 1a wird angemerkt, dass bei der Detektionvorrichtung 20 entsprechend weiteren Ausführungsbeispielen der Abstand zwischen der Röntgenquelle 26 und dem Röntgendetektor 28, z.B. in einem Bereich von 30 cm bis 120 cm, variiert werden kann, so dass die Durchleuchtungseinheit 22 auf unterschiedliche Erddamm-Breiten einstellbar ist. Des Weiteren ist durch den einstellbaren Abstand auch eine Einstellung der Breite des Strahlenkegels 30 möglich. Zur Einstellung dieses Abstandes kann die Detektionvorrichtung 20 eine Verstelleinheit (nicht dargestellt) aufweisen.

Bezug nehmend auf Fig. 1b und 1c wird angemerkt, dass ein Spargel entsprechend weiteren Ausführungsbeispielen aus einer Vielzahl von Längspositionen Xₓ mit einer Vielzahl von Durchleuchtungsaufnahmen, also mit einer Vielzahl von Durchleuchtungswinkeln durchleuchtet werden kann, so dass eine sehr genaue Bestimmung der Positionen in Längs- und Transversalrichtung x und z möglich ist. Ferner sei angemerkt, dass auf Basis dieser Vielzahl von Durchleuchtungsaufnahmen nicht nur der eine Spargel 10, sondern auch eine Vielzahl an Spargelstangen, die benachbart in dem Erddamm 12 angepflanzt sind, ermittelt werden können.

Es wird ferner angemerkt, dass das beschriebene Verfahren und die beschriebene Vorrichtung nicht auf die Detektion einer Position eines Spargels bzw. das Ernten eines Spargels beschränkt ist, sondern dass diese auch für weitere Agrarprodukte, wie z.B. Karotten, Kartoffeln oder unter der Erde bzw. in einem Erddamm wachsende Pilze oder andersartige (bevorzugterweise längliche) Pflanzen angewendet werden kann.

Ferner sei angemerkt, dass die oben beschriebene Vorrichtung nicht auf die Bestimmung der Position des Spargels beschränkt ist, sondern dass mittels dieser beschriebenen Vorrichtung auch entsprechend weiteren Ausführungsbeispielen eine zerstörungsfreie Beurteilung auf Basis der 3D-Bildgebung des in dem Erddamm wachsenden Agrarprodukts erfolgen kann. Also kann eine dreidimensionale, der Computertomographie ähnelnde Aufnahme mittels der beschriebenen Vorrichtung bzw. des beschriebenen Verfahrens trotz der reduzierten Winkelabtastung erzeugt werden.

Obwohl manche Aspekte im Zusammenhang mit einer Vorrichtung beschrieben wurden, versteht es sich, dass diese Aspekte auch eine Beschreibung des entsprechenden Verfahrens zur Detektion eines Spargels in einem Erddamm darstellt, so dass ein Block oder ein Bauelement einer Vorrichtung auch als ein entsprechender Verfahrensschritt oder als ein Merkmal eines Verfahrensschrittes verstanden ist.

Das Verfahren umfasst die Schritte des Durchleuchtens eines zwischen einer Röntgenquelle und einem Röntgendetektor einer Durchleuchtungseinheit positionierten Erddamms, des Aufnehmens von mindestens zwei Durchleuchtungsaufnahmen des Spargels in dem Erddamm aus mindestens zwei unterschiedlichen Durchleuchtungswinkeln und des Bestimmens einer Position des Spargels in Längsrichtung des Erddamms und einer Position des Spargels in Transversalrichtung auf Basis der mindestens zwei Durchleuchtungsaufnahmen des Spargels. Ferner kann das Verfahren wie oben bereits beschrieben die Schritte des Bewegens der Durchleuchtungseinheit umfassen, um so mittels des festen Strahlenkegels den Spargel in einer ersten und zweiten Längsposition mit einem ersten und einem zweiten Durchleuchtungswinkel aufzunehmen.

Ferner sei angemerkt, dass Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung darstellen. Einige oder alle der Verfahrensschritte können durch einen Hardware-Apparat (oder unter Verwendung eines Hardware-Apparats), wie z.B. einen Mikroprozessor, einen programmierbaren Computer oder eine elektrische Schaltung, ausgeführt werden. Bei einigen Ausführungsbeispielen können je nach bestimmter Implementierungsanforderung einige Verfahrensschritte in Software implementiert sein. Die Implementierung kann unter Verwendung eines digitalen Speichermediums, beispielsweise eines Floppy Disk oder eines Flashspeichers durchgeführt werden, auf dem elektrisch lesbare Steuersignale gespeichert sind, die mit einem programmierbaren Computer derart zusammenwirken können, dass das jeweilige Verfahren durchgeführt wird.

## Patentansprüche

1. Detektionsvorrichtung (20) zur Detektion eines Spargels (10) in einem Erddamm (12), mit folgenden Merkmalen:
einer Durchleuchtungseinheit (22), welche eine Röntgenquelle (26) und einen Röntgendetektor (28, 28a, 28b, 37) aufweist und die ausgebildet ist, um den zwischen der Röntgenquelle (26) und dem Röntgendetektor (28, 28a, 28b, 37) positionierten Erddamm (12) zu durchleuchten und um mindestens zwei Durchleuchtungsaufnahmen (32a, 32b) des Spargels (10) aus mindestens zwei unterschiedlichen Durchleuchtungswinkeln (αₐ₁₀, α_{b10}) aufzunehmen; und
einer Bildverarbeitungseinheit (24), die ausgebildet ist, um auf Basis der mindestens zwei Durchleuchtungsaufnahmen (32a, 32b) eine Position des Spargels (10) in Längsrichtung (x) des Erddamms (12) und einen Position des Spargels (10) in Transversalrichtung (z) des Erddamms (12) zu bestimmen.

2. Detektionsvorrichtung (20) gemäß Anspruch 1, welche eine Verfahreinheit umfasst, die ausgebildet ist, um die Durchleuchtungseinheit (22) längs des Erddamms (12) entlang unterschiedlichen Längspositionen (x) zu bewegen.

3. Detektionsvorrichtung (20) gemäß Anspruch 2, wobei die Röntgenquelle (26) einen festen Strahlenkegel (30) aufweist und ausgebildet ist, um Röntgenstrahlung (30) von unterschiedlichen Positionen während der Bewegung längs des Erddamms (12) zu emittieren, um so die Röntgenstrahlung (30) mit den mindestens zwei Durchleuchtungswinkeln (αₐ₁₀, α_{b10}) zu emittieren,
wobei der Röntgendetektor (28, 28a, 28b, 37) ausgebildet ist, um jeweils ein Absorptionsprofil (10a') für die mindestens zwei Durchleuchtungswinkel (αₐ₁₀, α_{b10}) zu detektieren.

4. Detektionsvorrichtung (20) gemäß einem der Ansprüche 1 bis 3, wobei der Röntgendetektor (28, 28a, 28b, 37) eine oder mehrere Zeilen (28, 28a, 28b) mit einer Mehrzahl von Sensoren längs des Erddamms (12) aufweist.

5. Detektionsvorrichtung (20) gemäß einem der Ansprüche 1 bis 4, wobei die Bildverarbeitungseinheit (24) ausgebildet ist, um auf Basis der mindestens zwei Durchleuchtungsaufnahmen (32a, 32b) eine Position des Spargels (10) in Vertikalrichtung (y) zu bestimmen.

6. Detektionsvorrichtung (20) gemäß einem der Ansprüche 1 bis 5, wobei die Bildverarbeitungseinheit (24) ausgebildet ist, um auf Basis der mindestens zwei Durchleuchtungsaufnahmen (32a, 32b) eine mittlere Wachstumsrichtung des Spargels (10) zu bestimmen.

7. Detektionsvorrichtung (20) gemäß einem der Ansprüche 1 bis 6, wobei die Bildverarbeitungseinheit (24) ausgebildet ist, um auf Basis der mindestens zwei Durchleuchtungsaufnahmen (32a, 32b) eine Größe und/oder einen Reifegrad des Spargels (10) zu bestimmen.

8. Detektionsvorrichtung (20) gemäß einem der Ansprüche 1 bis 7, wobei ein Abstand zwischen der Röntgenquelle (26) und dem Röntgendetektor (28, 28a, 28b, 37) einstellbar ist.

9. Detektionsvorrichtung (20) gemäß einem der Ansprüche 1 bis 8, wobei der Röntgendetektor (28, 28a, 28b, 37) einen Kollimator aufweist.

10. Erntesystem (40) mit folgenden Merkmalen:
einer Detektionsvorrichtung (20) gemäß einem der Ansprüche 1 bis 9; und
einer Erntevorrichtung (44) mit einer Positionierungseinheit (46) und einer Stecheinheit (48), wobei die Positionierungseinheit (46) ausgebildet ist, um die Stecheinheit (48) in Abhängigkeit von der von der Bildverarbeitungseinheit (24) bestimmten Position des Spargels (10) in Längsrichtung (x) und von der von der Bildverarbeitungseinheit (24) bestimmten Position des Spargels (10) in Transversalrichtung (z) zu positionieren, und die Stecheinheit (48) ausgebildet ist, um den Spargel (10) nach der Positionierung zu ernten.

11. Erntesystem (40) gemäß Anspruch 10, wobei die Positionierungseinheit (46) ausgebildet ist, um einen Stechwinkel der Stecheinheit (48) in Abhängigkeit einer von der Bildverarbeitungseinheit (24) bestimmten mittleren Wachstumsrichtung des Spargels (10) einzustellen.

12. Erntesystem (40) gemäß Anspruch 10 oder 11, wobei die Stecheinheit (48) ausgebildet ist, um den Spargel (10) in Abhängigkeit einer von der Bildverarbeitungseinheit (24) bestimmten Größe des Spargels (10) und/oder eines Reifegrads des Spargels (10) selektiv zu ernten.

13. Verwendung einer Detektionsvorrichtung (20) gemäß einem der Ansprüche 1 bis 9 zur Bestimmung der Position des Spargels (10) in Längsrichtung (x) und der Position des Spargels (10) in Transversalrichtung (z).

14. Verwendung einer Detektionsvorrichtung (20) gemäß einem der Ansprüche 1 bis 9 zur Positionierung einer Erntevorrichtung (44) in Abhängigkeit von der bestimmten Position des Spargels (10) in Längsrichtung (x) und der bestimmten Position des Spargels (10) in Transversalrichtung (z).

15. Verfahren zur Detektion eines Spargels (10) in einem Erddamm (12), mit folgenden Schritten:
Durchleuchten des zwischen einer Röntgenquelle (26) und einem Röntgendetektor (28, 28a, 28b, 37) einer Durchleuchtungseinheit (22) positionierten Erddamms (12);
Aufnehmen von mindestens zwei Durchleuchtungsaufnahmen (32a, 32b) des Spargels (10) aus mindestens zwei unterschiedlichen Durchleuchtungswinkeln (αₐ₁₀, α_{b10}); und
Bestimmen einer Position des Spargels (10) in Längsrichtung (x) des Erddamms (12) und einer Position des Spargels (10) in Transversalrichtung (z) des Erddamms (12) auf Basis der mindestens zwei Durchleuchtungsaufnahmen (32a, 32b) des Spargels (10).

16. Verfahren gemäß Anspruch 15, das den Schritt des Bewegens der Durchleuchtungseinheit (22) längs des Erddamms (12) umfasst.

17. Verfahren gemäß Anspruch 16, bei dem während des Bewegens Röntgenstrahlung (30) mit einen festen Strahlenkegel (30) emittiert wird, um so den Spargel (10) in einer ersten Längsposition (x₁) mit einem ersten Durchleuchtungswinkel (αₐ₁₀) aufzunehmen und den Spargel (10) in einer zweiten Längsposition (x₂), die gegenüber der ersten Längsposition (x₁) entlang des Erddamms (12) verschobenen ist, mit einem zweiten Durchleuchtungswinkel (α_{b10}) aufzunehmen.

18. Verfahren gemäß einem der Ansprüche 15 bis 17, das den Schritt des Bestimmens weiterer Parameter des Spargels (10) aufweist.

19. Verfahren gemäß einem der Ansprüche 15 bis 18, das den Schritt des Einstellens des Abstands zwischen der Röntgenquelle (26) und dem Röntgendetektor (28, 28a, 28b, 37) aufweist.

20. Verfahren gemäß einem der Ansprüche 15 bis 19, das den Schritt des Ausrichtens eines Erntesystems (40) in Abhängigkeit von der bestimmten Position des Spargels (10) in Längsrichtung (x) und von der bestimmten Position des Spargels (10) in Transversalrichtung (z) aufweist.
